# EUROPEAN PATENT SPECIFICATION

(11) **EP 2 287 212 B1**
(45) Date of publication and mention of the grant of the patent: **26.03.2014**
(21) Application number: 10173542.1
(22) Date of filing: 20.08.2010
(51) Int. Cl.: C08F 10/02, C08F 4/656, C08F 4/657, C08F 4/658

(54) **A catalyst component for ethylene polymerization, preparation thereof and a catalyst comprising the catalyst component**
Katalysatorkomponente zur Ethylenpolymerisation, Herstellung davon und Katalysator mir der Katalysatorkomponente
Composant de catalyseur pour la polymérisation d'éthylène, préparation correspondante et catalyseur le comprenant

(30) Priority: 21.08.2009 CN 200910163054; 10.09.2009 CN 200910170279
(43) Date of publication of application: 23.02.2011
(73) Proprietor: China Petroleum & Chemical Corporation, Beijing 100728 (CN); Beijing Research Institute of Chemical Industry, China Petroleum & Chemical Corporation, Chaoyang District Beijing 100013 (CN)
(72) Inventor: Zhang, Taoyi, Beijing 100013 (CN); Zhou, Junling, Beijing 100013 (CN); Wang, Hongtao, Beijing 100013 (CN); Guo, Zifang, Beijing 100013 (CN); Gou, Qingqiang, Beijing 100013 (CN); Yang, Hongxu, Beijing 100013 (CN); Li, Ruixia, Beijing 100013 (CN); Xu, Shiyuan, Beijing 100013 (CN)
(74) Representative: HOFFMANN EITLE

(56) References cited:
- EP-A1- 1 947 123
- EP-A1- 2 420 519
- CN-A- 101 838 353
- US-A- 4 442 276
- US-A1- 2004 242 409
- US-B2- 6 716 924

## Description

### Field of the Invention

The present invention relates to a catalyst component for ethylene polymerization, a process for preparing the same, and a highly active catalyst comprising the same.

### Background Art

It is known that catalyst systems containing titanium and magnesium are predominant catalysts in commercial production of polyolefin. The research on such catalysts focuses mainly on catalytic activity, particle morphology and particle size distribution of catalyst, hydrogen response of catalyst, copolymerization property of catalyst, etc.

In the prior art, in order to obtain catalysts having uniform particle diameter and good particle morphology, dissolution-precipitation processes are generally utilized to prepare the catalysts. In theses processes, a magnesium compound is first dissolved in a solvent to form a solution, then a titanium compound is added to the solution, and finally solid catalyst component particles are precipitated from the solution. For example, JP 54-40293 proposes to dissolve the magnesium compound with a titanate, JP 56-811 and JP 58-83006 propose to dissolve the magnesium compound with a compound chosen from alcohols, aldehydes, amines and carboxylic acids, JP 58-19307 proposes to dissolve the magnesium compound with an organophosphorus compound, and USP4784983 discloses the dissolution of the magnesium compound with a solvent system comprising an epoxy compound and an organophosphorus compound.

CN1006071B discloses a catalytic system useful in olefin polymerization and copolymerization, comprising: a) a Ti-containing solid catalyst component, b) an alkylaluminum compound, and c) an organic silicon compound, wherein the component a) is obtained by dissolving a magnesium halide in a solvent system comprising an organic epoxy compound and an organophosphorus compound to form a homogeneous solution, combining the solution with a titanium tetrahalide or a derivate thereof, precipitating solids in the presence of an auxiliary precipitant chosen from anhydrides, organic acids and the like, and treating the solids with an ester of a polycarboxylic acid and then with a titanium tetrahalide and an inert diluent. When used in ethylene polymerization, this catalytic system exhibits a low activity and bad hydrogen response.

CN1086191C discloses a catalytic system useful in ethylene polymerization and copolymerization, which is prepared by dissolving a magnesium halide in a solvent system comprising an organic epoxy compound, an organophosphorus compound and an electron-donating activator to form a homogeneous solution, and reacting the solution with a titanium tetrahalide or a derivate thereof in the presence of an auxiliary precipitant chosen from anhydrides, organic acids, ethers and ketones. This catalytic system still suffers from bad hydrogen response and excessive polymer fines.

CN1958620A discloses a catalytic system useful in ethylene polymerization and copolymerization, of which main catalyst component is a reaction product of a magnesium complex, which is obtained by dissolving a magnesium halide in a solvent comprising an epoxy compound and an organophosphorus compound at least one titanium compound, at least one alcohol compound and at least one organic silicon compound, which is preferably tetraethoxysilane. This catalytic system has advantages such as high catalytic activity, good hydrogen response, and narrow particle size distribution of polymer.

### Summary of the Invention

The inventors have found that a catalyst component for ethylene polymerization can be prepared by a dissolution-precipitation process which uses a specific silane compound as an auxiliary precipitant, which catalyst component, when used in ethylene polymerization, exhibits a high catalytic activity and better hydrogen response and gives a polymer having narrow particle size distribution, little fines and high bulk density. Furthermore, when an organic borate compound capable of reacting with water and thereby removing water as an impurity present in the reaction system is further used in the process for the preparation of the catalyst component, the operation for dewatering a solvent required by the catalyst preparation process can be simplified. Thus, the catalyst preparation process has advantages such as convenient operation, little raw material consumption, high equipment utilization rate, and little pollution to the environment.

An object of the invention is to provide a catalyst component for ethylene polymerization, comprising a reaction product of
(1) a magnesium complex obtained by dissolving a magnesium halide in a solvent system;
(2) at least one titanium compound; and
(3) at least one organic silicon compound of formula (I) defined below.

Another object of the invention is to provide a method for preparing the catalyst component according to the invention.

Still another object of the invention is to provide a catalyst for ethylene polymerization, which comprises a reaction product of (1) the catalyst component according to the invention; and (2) an organoaluminum cocatalyst.

Yet still another object of the invention is to provide a process for ethylene polymerization, which process comprises the steps of (i) contacting ethylene and optionally comonomer(s) with the catalyst according to the invention under polymerization conditions to form a polymer; and (ii) recovering the polymer formed in step (i).

### Detailed Description of the Preferred Embodiments

The term "polymerization" as used herein includes both homopolymerization and copolymerization. The term "polymer" as used herein includes homopolymer, copolymer and terpolymer.

As used herein, the term "catalyst component" means main catalyst component or procatalyst, which may be used with a conventional cocatalyst such as an alkylaluminum to provide a catalyst for ethylene polymerization as disclosed herein.

In the first aspect, the present invention provides a catalyst component for ethylene polymerization, comprising a reaction product of
(1) a magnesium complex obtained by dissolving a magnesium halide in a solvent system;
(2) at least one titanium compound of formula Ti(OR)ₐX_{b}, wherein R is independently a C₁-C₁₄ hydrocarbyl, X is independently a halogen, a is 0, 1, 2, 3 or 4, b is 1, 2, 3 or 4, and a+b=3 or 4; and
(3) at least one organic silicon compound of formula (I): 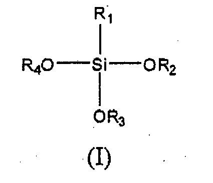 wherein R₁ is a C₃-C₂₀ aliphatic hydrocarbyl, which is substituted with at least one substituent chosen from halogens, C₁-C₆ acyloxy groups, epoxy, amino, C₁-C₆ alkylamino groups, di(C₁-C₆ alkyl)amino groups, C₁-C₆ alkoxy groups, glycidoxy, and oxo group; R₂, R₃ and R₄ are independently a C₁-C₁₀ aliphatic hydrocarbyl, a C₃-C₁₀ alicyclic hydrocarbyl, a C₆-C₁₀ aryl, a C₇-C₁₀ aralkyl, or a C₇-C₁₀ alkaryl, wherein the solvent system is one comprising at least one organic epoxy compound, at least one organic boron compound, at least one alcohol, and optionally at least one inert diluent, or one comprising at least one organic epoxy compound, at least one organophosphorus compound, at least one alcohol, and optionally at least one inert diluent, and
   wherein the at least one alcohol is chosen from optionally halogenated linear alkyl alcohols having from 1 to 10 carbon atoms, optionally halogenated branched alkyl alcohols having from 3 to 10 carbon atoms, optionally halogenated cycloalkyl alcohols having from 3 to 10 carbon atoms, optionally halogenated aryl alcohols having from 6 to 20 carbon atoms, optionally halogenated aralkyl alcohols having from 7 to 20 carbon atoms, optionally halogenated alkaryl alcohols having from 7 to 20 carbon atoms, and mixtures thereof.

In an embodiment, the magnesium halide is chosen from magnesium dihalides, hydrates of magnesium dihalides, alcohol complexes of magnesium dihalides, derivatives of magnesium dihalides wherein one halogen atom in the magnesium dihalide molecule is replaced with an alkoxy or a halogenated alkoxy, and mixtures thereof. For example, the magnesium halide may be chosen from magnesium dihalides, hydrates of magnesium dihalides, alcohol complexes of magnesium dihalides, and mixtures thereof. The magnesium halide may be chosen, for example, from magnesium dichloride, magnesium dibromide, magnesium diiodium, phenoxy magnesium chloride, isopropoxy magnesium chloride, butoxy magnesium chloride, and mixtures thereof.

The solvent system is one comprising at least one organic epoxy compound, at least one organic boron compound, at least one alcohol, and optionally at least one inert diluent or is one comprising at least one organic epoxy compound, at least one organophosphorus compound, at least one alcohol, and optionally at least one inert diluent.

Organic epoxy compounds useful in the invention include aliphatic epoxy compounds and diepoxy compounds, halogenated aliphatic epoxy compounds and diepoxy compounds, glycidyl ether, and inner ethers, having from 2 to 8 carbon atoms. Examples include, but are not limited to, epoxy ethane, epoxy propane, epoxy butane, vinyl epoxy ethane, butadiene dioxide, epoxy chloropropane, glycidyl methyl ether, diglycidyl ether, and tetrahydrofuran, with epoxy chloropropane being preferred. These organic epoxy compounds may be used alone or in combination.

Organophosphorus compounds useful in the invention include hydrocarbyl esters of phosphoric acid, halogenated hydrocarbyl esters of phosphoric acid, hydrocarbyl esters of phosphorous acid, and halogenated hydrocarbyl esters of phosphorous acid. Examples include, but are not limited to, trimethyl phosphate, triethyl phosphate, tributyl phosphate, triphenyl phosphate, trimethyl phosphite, triethyl phosphite, tributyl phosphite and tribenzyl phosphite, with tributyl phosphate being preferred. These organophosphorus compounds may be used alone or in combination.

In an embodiment, the at least one organic boron compound is of the formula (II): 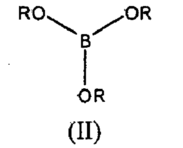 wherein R is independently a C₁-C₂₀ linear or branched alkyl, a C₃-C₂₀ cycloalkyl, a C₆-C₂₀ aryl, a C₇-C₂₀ aralkyl, or a C₇-C₂₀ alkaryl. In a further embodiment, the at least one organic boron compound is of the formula (II), wherein R is independently a C₁-C₂₀ linear alkyl. For example, the at least one organic boron compound may be chosen from triethyl borate, tripropyl borate, tributyl borate, tri-iso-butyl borate, tri-tert-butyl borate, triamyl borate, tri-isoamyl borate, trihexyl borate, tri(2-ethylbutyl) borate, triheptyl borate, trioctyl borate, tri(2-ethylhexyl) borate, trinonyl borate, tris-decyl borate, tris(lauryl) borate, and mixtures thereof. The organic boron compound can be introduced into the reaction system as such or as a reaction product of a boron halide and a hydroxyl-carrying compound.

The at least one alcohol is chosen from optionally halogenated linear alkyl alcohols having from 1 to 10 carbon atoms, optionally halogenated branched alkyl alcohols having from 3 to 10 carbon atoms, optionally halogenated cycloalkyl alcohols having from 3 to 10 carbon atoms, optionally halogenated aryl alcohols having from 6 to 20 carbon atoms, optionally halogenated aralkyl alcohols having from 7 to 20 carbon atoms, optionally halogenated alkaryl alcohols having from 7 to 20 carbon atoms, and mixtures thereof. Examples of the alcohol include aliphatic alcohols, such as methanol, ethanol, propanol, isopropanol, butanol, isobutanol, glycerol, hexanol, 2-methylpentanol, 2-ethylbutanol, n-heptanol, 2-ethylhexanol, n-octanol, decanol; cycloalkyl alcohols, such as cyclohexanol, methylcyclohexanol; aromatic alcohols, such as phenylmethanol, tolylmethanol, α-methylphenylmethanol, α,α-dimethylphenylmethanol, isopropylphenylmethanol, phenylethanol; halogenated alcohols, such as 3,3,3-trichloroethanol and 6,6,6-trichlorohexanol. Among these, ethanol, butanol, 2-ethylhexanol and glycerin are preferred.

In order to dissolve more sufficiently the magnesium halide, an inert diluent is optionally contained in the solvent system. The inert diluent comprises generally aromatic hydrocarbons or alkanes, as long as it can facilitate the dissolution of the magnesium halide. Examples of the aromatic hydrocarbons include benzene, toluene, xylene, chlorobenzene, dichlorobenzene, trichlorobenzene, chlorotoluene, and derivatives thereof. Examples of the alkanes include linear alkanes, branched alkanes and cycloalkanes, having from 3 to 20 carbon atoms, for example, butanes, pentanes, hexanes, cyclohexane, and heptanes. These inert diluents may be used alone or in combination. The amount of the inert diluent, if used, is not specially limited. However, from the viewpoint of easiness of operation and economical efficiency, it is preferably used in an amount of from 0.2 to 10.0 liters relative to one mole of the magnesium halide.

In the formation of the magnesium complex, the amounts of the individual materials used are as follows: from 0.2 to 10.0 moles, and preferably from 0.3 to 4.0 moles for the organic epoxy compound; from 0.1 to 10.0 moles, and preferably from 0.2 to 4.0 moles for the organic boron compound or the organophosphorus compound; and from 0.1 to 10.0 moles, and preferably from 1.0 to 4.0 moles for the alcohol compound, relative to one mole of the magnesium halide.

In an embodiment, the titanium compound can be chosen from titanium tetrachloride, titanium tetrabromide, titanium tetraiodide, tetrabutoxy titanium, tetraethoxy titanium, triethoxy titanium chloride, diethoxy titanium dichloride, ethoxy titanium trichloride, titanium trichloride, and mixtures thereof.

In a preferred embodiment, the at least one organic silicon compound is of the formula (I), wherein R₁ is a C₃-C₂₀ linear or branched alkyl group, which is substituted with at least one substituent chosen from Cl, Br, C₁-C₆ acyloxy groups, epoxy, amino, C₁-C₆ alkylamino groups, di(C₁-C₆ alkyl)amino groups, C₁-C₆ alkoxy groups, glycidoxy, and oxo group; and R₂, R₃ and R₄ are independently a C₁-C₁₀ linear alkyl, a C₃-C₁₀ branched alkyl, or a C₃-C₁₀ cycloalkyl.

Examples of the organic silicon compounds include, but are not limited to, γ -chloropropyltrimethoxysilane, γ-chlorobutyltrimethoxysilane, γ-chlorohexyltrimethoxysilane, γ -chlorooctyltrimethoxysilane, γ-chloropropyltriethoxysilane, γ -chlorobutyltriethoxysilane, γ-chlorohexyltriethoxysilane, γ-chlorooctyltriethoxysilane, γ-chloropropyltributoxysilane, γ -chlorobutyltributoxysilane, γ-chlorohexyltributoxysilane, γ -chlorooctyltributoxysilane, γ-acryloxypropyltrimethoxysilane, γ -acryloxybutyltrimethoxysilane, γ-acryloxyhexyltrimethoxysilane, γ-acryloxyoctyltrimethoxysilane, γ -acryloxypropyltriethoxysilane, γ-acryloxybutyltriethoxysilane, γ-acryloxyhexyltriethoxysilane, γ -acryloxyoctyltriethoxysilane, γ-acryloxypropyltributoxysilane, γ-acryloxybutyltributoxysilane, γ -acryloxyhexyltributoxysilane, γ-acryloxyoctyltributoxysilane, γ -methacryloxypropyltrimethoxysilane, γ -methacryloxybutyltrimethoxysilane, γ-inethacryloxyhexyltrimethoxysilane, γ -methacryloxyoctyltrimethoxysilane, γ-methacryloxypropyltriethoxysilane, γ-methacryloxybutyltriethoxysilane, γ -methacryloxyhexyltriethoxysilane, γ-methacryloxyoctyltriethoxysilane, γ -methacryloxypropyltributoxysilane, γ -methacryloxybutyltributoxysilane, γ-methacryloxyhexyltributoxysilane, γ-methacryloxyoctyltributoxysilane, γ -(2,3-epoxypropoxy)propyltrimethoxysilane, γ-(2,3-epoxypropoxy)butyltrimethoxysilane, γ -(2,3-epoxypropoxy)hexyltrimethoxysilane, γ-(2,3-epoxypropoxy)octyltrimethoxysilane, γ -(2,3-epoxypropoxy)propyltriethoxysilane, γ-(2,3-epoxypropoxy)butyltriethoxysilane, γ -(2,3-epoxypropoxy)hexyltriethoxysilane, γ-(2,3-epoxypropoxy)actyltriethoxysilane, γ -(2,3-epoxypropoxy)propyltributoxysilane, γ-(2,3-epoxypropoxy)butyltributoxysilane, γ -(2,3-epoxvpropoxy)hexyltributoxysilane, γ -(2,3-epoxypropoxy)octyltributoxysilane, γ -(N,N-dimethylaminopropyl)trimethoxysilane, γ-(N,N-diethylaminopropyl)trimethoxysilane, γ -(N,N-dipropylaminopropyl)trimethoxysilane, γ -(N,N-dibutylaminopropyl)trimethoxysilane, γ-(N,N-dimethylaminopropyl)triethoxysilane, γ -(N,N-diethylaminopropyl)triethoxysilane, γ-(N,N-dipropylaminopropyl)triethoxysilane, γ -(N,N-dibutylaminopropyl)triethoxysilane, γ-(N,N-dimethylaminopropyl)tributoxysilane, γ -(N,N-diethylaminopropyl)tributoxysilane, γ-(N,N-dipropylaminopropyl)tributoxysilane, γ-(N,N-dibutylaminopropyl)tributoxysilane, γ -(N,N-dimethylaminopropyl)trihexyloxysilane, γ-(N,N-diethylaminopropyl)trihexyloxysilane, γ -(N,N-dipropylaminopropyl)trihexyloxysilane, γ-(N,N-dibutylaminopropyl)trihexyloxysilane, γ-(N,N-dimethylaminopropyl)trioctyloxysilane, γ-(N,N-diethylam.inopropyl)trioctyloxysilane, γ-(N,N-dipropylaminopropyl)trioctyloxysilane, γ-(N,N-dibutylaminopropyl)trioctyloxysilane, and mixtures thereof. Among these, the preferred are γ-chloropropyltrimethoxysilane, γ -chloropropyltriethoxysilane, γ-acryloxypropyltrimethoxysilane, γ-acryloxypropyltriethoxy silane, γ-methacryloxypropyltrimethoxysilane, γ-methacryloxypropyltriethoxysilane, γ -(2,3-epoxypropoxy)propyltrimethoxysilane, γ-(2,3-epoxypropoxy)propyltriethoxysilane, γ -(N,N-dimethylaminopropyl)trimethoxysilane, and γ-(N,N-dimethylaminopropyl)triethoxy silane, and the more preferred are γ-methacryloxypropyltriethoxysilane, γ -(2,3-epoxypropoxy)propyltriethoxysilane, and γ-(N,N-dimethylaminopropyl)triethoxysilane.

In the invention, the organic silicon compound serves at least as an auxiliary precipitant to facilitate the formation of catalyst component particles. It is also believed that the use of the organic silicon compound improves the performance of the final titanium-containing catalyst component.

At least one organic aluminum compound of formula AlRₙX₃₋ₙ, wherein R is independently a C₁-C₂₀ hydrocarbyl, especially alkyl, aralkyl or aryl; X is independently hydrogen or a halogen, especially chlorine or bromine; and n is a value satisfying 1< n ≤3, can be optionally introduced into the catalyst component according to the invention. Examples of such an organic aluminum compound include trialkyl aluminum compounds, such as trimethyl aluminum, triethyl aluminum, triisobutyl aluminum and trioctyl aluminum; alkyl aluminum hydrides, such as diethyl aluminum hydride and diisobutyl aluminum hydride; and alkyl aluminum halides, such as diethyl aluminum chloride, di-isobutyl aluminum chloride, ethyl aluminum sesquichloride and ethyl aluminum dichloride. Among these, alkyl aluminum halides are preferred, and diethyl aluminum chloride is the most preferred. These organic aluminum compounds may be used alone or in combination. Adding an amount of the organic aluminum compound may contribute to the improvement of the activity and hydrogen response of the catalyst component, whereas excessive organic aluminum compound may inhibit the activity of the catalyst component, and make the reaction system viscous, thereby going against the precipitation of the catalyst component. Therefore, the amount of the organic aluminum compound used ranges preferably from 0 to 5 moles, relative to one mole of the magnesium halide.

As indicated above, the catalyst component for ethylene polymerization according to the invention comprises a reaction product of the magnesium complex, the at least one titanium compound, the at least one organic silicon compound, and optionally the at least one organic aluminum compound, wherein the amounts of the individual reactants used may be as follows: from 0.05 to 1.0 moles, and preferably from 0.2 to 0.8 moles, for the organic silicon compound; from 0 to 5.0 moles for the organic aluminum compound; and from 1.0 to 15.0 moles, and preferably from 2.0 to 10.0 moles, for the titanium compound, relative to one mole of the magnesium halide in the magnesium complex.

In an embodiment, the catalyst component according to the invention consists essentially of the aforesaid reaction product. Such a catalyst component may comprise: Ti: 4.5 to 8.5 wt%, Mg: 13.0 to 19.0 wt%, Cl: 57.0 to 69.0 wt%, Si: 0.2 to 1.2 wt%, alkoxy group: 4.0 to 8.5 wt%, B/P: 0.1 to 1.0 wt%, and Al: 0 to 2.0 wt%.

In the second aspect, the invention provides a process for the preparation of the catalyst component of the invention, comprising the steps of
(1) dissolving a magnesium halide in a solvent system, which is one comprising at least one organic epoxy compound, at least one organic boron compound, at least one alcohol, and optionally at least one inert diluent, or one comprising at least one organic epoxy compound, at least one organophosphorus compound, at least one alcohol, and optionally at least one inert diluent, at a temperature ranging from 40 to 100 °C, to form a solution, such as a homogeneous solution;
(2) combining the solution from step (1) with at least one titanium compound and at least one organic silicon compound at a temperature ranging from -40 to 10°C, to form a mixture;
(3) heating the mixture to a temperature ranging from 40 to 120°C over a period of time, such as about 0.5 to 3 hours, and maintaining at that temperature for a period of time, such as about 0.5 to 3 hours, to precipitate solids; and
(4) recovering the solids as the catalyst component, wherein the solvent system is one comprising at least one organic epoxy compound, at least one organic boron compound, at least one alcohol, and optionally at least one inert diluent, or one comprising at least one organic epoxy compound, at least one organophosphorus compound, at least one alcohol, and optionally at least one inert diluent, and
   wherein the at least one alcohol is chosen from optionally halogenated linear alkyl alcohols having from 1 to 10 carbon atoms, optionally halogenated branched alkyl alcohols having from 3 to 10 carbon atoms, optionally halogenated cycloalkyl alcohols having from 3 to 10 carbon atoms, optionally halogenated aryl alcohols having from 6 to 20 carbon atoms, optionally halogenated aralkyl alcohols having from 7 to 20 carbon atoms, optionally halogenated alkaryl alcohols having from 7 to 20 carbon atoms, and mixtures thereof.

The materials used in the process are as described above for the catalyst component of the invention.

In step (1), the amounts of the individual materials used are as described above for the magnesium complex. The temperature for dissolution may range from 40 to 100 °C, and preferably from 50 to 90 °C. The time for which step (1) is conducted is not specially limited. However, it is generally preferable to maintain further a period of time, such as from 20 minutes to 5 hours, and further such as from 30 minutes to 2 hours, after the solution has become clear.

In step (2), the solution obtained in step (1) is combined with the at least one titanium compound and the at least one organic silicon compound. The order for combining the three materials is not crucial. For example, in one embodiment, the solution obtained in step (1) is combined first with the at least one titanium compound and then with the at least one organic silicon compound at a temperature ranging from -40 to 10°C. In another embodiment, the solution obtained in step (1) is combined first with the at least one organic silicon compound and then with the at least one titanium compound at a temperature ranging from -40 to 10°C. Relative to one mole of the magnesium halide in the magnesium complex, the amount of the organic silicon compound may range from 0.05 to 1.0 moles, and preferably from 0.2 to 0.8 moles, and the amount of the titanium compound may range from 1.0 to 15.0 moles, and preferably from 2.0 to 10.0 moles.

The recovering operation of step (4) can be performed according to conventional processes known in the art. In general, the recovering operation may include filtering, washing the filter cake with an inert solvent such as hexane, and optionally drying the solids.

In the third aspect, the invention provides a catalyst for ethylene polymerization, which catalyst comprises a reaction product of:
(1) the catalyst component of the invention; and
(2) at least one organic aluminum compound of formula AlRₙX₃₋ₙ, wherein R is independently a C₁-C₂₀ hydrocarbyl, and preferably a C₁-C₂₀ alkyl, a C₇-C₂₀ aralkyl, or a C₆-C₂₀ aryl; X is independently hydrogen or a halogen, and preferably Cl or Br; and n has a value satisfying 1<n≤3.

In an embodiment, the at least one organic aluminum compound as the component (2) is chosen from trialkyl aluminum compounds, such as trimethyl aluminum, triethyl aluminum, triisobutyl aluminum, tri-n-butyl aluminum, tri-n-hexyl aluminum, tri-n-octyl aluminum; alkyl aluminum hydrides, such as diethyl aluminum hydride, diisobutyl aluminum hydride; alkyl aluminum halides, such as diethyl aluminum chloride, di-isobutyl aluminum chloride, ethyl aluminum sesquichloride, ethyl aluminum dichloride, and mixtures thereof. Preferably, the at least one organic aluminum compound as the component (2) is chosen from trialkyl aluminum compounds, and most preferably from triethyl aluminum and triisobutyl aluminum.

In the catalyst according to the invention, the molar ratio of aluminum in the component (2) to titanium in the component (1) ranges from 5 to 500, and preferably from 20 to 200.

In the fourth aspect, the invention provides a process for the polymerization of ethylene, comprising contacting, under polymerization conditions, ethylene and optionally at least one α -olefin having from 3 to 20 carbon atoms as a comonomer with the catalyst of the invention; and recovering the resulting polymer. Examples of the α-olefin copolymerizable with ethylene include, but are not limited to, propylene, 1-butene, 4-methyl-1-pentene, 1-hexane, 1-octene, 1-decene, and 1-dodecene.

The polymerization process can be carried out in liquid phase or gas phase. The catalyst according to the invention is especially suitable for a slurry polymerization process, or a combined polymerization process including slurry phase polymerization, for example, a process comprising slurry phase polymerization and gas phase polymerization.

Examples of media useful in the liquid phase polymerization include saturated aliphatic and aromatic inert solvents, such as isobutane, hexane, heptane, cyclohexane, naphtha, raffinate, hydrogenated gasoline, kerosene, benzene, toluene, xylene, and the like.

In order to regulate the molecular weight of the final polymers, hydrogen gas can be used as a molecular weight regulator in the polymerization process according to the invention.

The inventions disclosed herein have at least one of the following advantages: (1) due to the use of the organic boron compound, which can react with water and thus serve as a scavenger to remove impurity water present in the reaction system, in the preparation of the catalyst component of the invention, the solvent dewatering process required by the catalyst preparation can be simplified; (2) the use of the organic silicon compound carrying a functional group as an auxiliary precipitant facilitates the precipitation of catalyst component particles, so that it is no longer required to use a large quantity of titanium tetrachloride to precipitate the catalyst component particles; and (3) the catalysts of the invention exhibit excellent properties, including high catalytic activities, good hydrogen response, narrow particle size distribution of the resulting polymer, little polymer fines, and high polymer bulk density.

### Examples

The following examples are provided to further illustrate the present invention and by no means intend to limit the scope thereof.

### Example 1

### (1) Preparation of a catalyst component

To a reactor, in which air had been repeatedly replaced with high pure N₂, were charged successively with 4.0 g of anhydrous magnesium dichloride, 50 ml of toluene, 6.0 ml of epoxy chloropropane, 6.0 ml of tributyl borate, and 5.6ml of ethanol. The reaction mixture was heated with stirring to 70°C. After the solids had been dissolved, the mixture was further maintained at 70°C for 1 hour. The reaction mixture was cooled to -5°C, 40ml of TiCl₄ was added dropwise thereto, and then 3.0 ml of γ-(N,N-dimethylaminopropyl)triethoxysilane was added thereto. The reaction mixture was allowed to react for 1 hour, and then heated slowly to 80°C and further maintained at that temperature for 2 hours. The stirrer was stopped, and solids in the reaction mixture settled down quickly. Supernatant was filtered off. The residual solids were washed with toluene twice and with hexane four times, and then dried under a high pure N₂ flow, to give a free flowing solid catalyst component. The composition of the catalyst component is shown in Table 1 below.

### (2) Ethylene Polymerization

Under nitrogen atmosphere, about 0.5 g of the above catalyst component was dispersed in 50 ml of hexane through stirring, to form a suspension of the solid catalyst component in hexane useful in ethylene polymerization.

To a 2L stainless steel autoclave, in which air had been sufficiently replaced with high pure N₂, were charged with 1L of hexane, 1.0 ml of 1M solution of triethyl aluminum in hexane, and an aliquot of the suspension of the solid catalyst component in hexane prepared above (containing 0.3 mg of Ti). The reactor was heated to 70°C, and hydrogen gas was added thereto until the pressure inside the reactor reached 0.28MPa (gauge), then ethylene was added thereto until the total pressure inside the reactor reached 0.73MPa (gauge). The polymerization reaction was allowed to continue at 80 °C for 2 hours, with ethylene being supplied to maintain the total pressure of 0.73MPa (gauge). The polymerization results are shown in Table 2 below.

### Example 2

A catalyst component was prepared according to the procedure described in Example 1, except that the amount of ethanol was changed to 6.9ml, and the amount of tributyl borate was changed to 7.0ml. The composition of the catalyst component is shown in Table 1 below.

An ethylene polymerization was carried out according to the procedure described in Example 1. The results are shown in Table 2 below.

### Example 3

A catalyst component was prepared according to the procedure described in Example 2, except that tributyl borate was replaced with 7.0ml of trioctyl borate. The composition of the catalyst component is shown in Table 1 below.

An ethylene polymerization was carried out according to the procedure described in Example 1. The results are shown in Table 2 below.

### Example 4

To a reactor, in which air had been repeatedly replaced with high pure N₂, were charged successively with 4.03 g of anhydrous magnesium dichloride, 50 ml of toluene, 6.0 ml of epoxy chloropropane, 6.0 ml of tributyl borate, and 5.6ml of ethanol. The reaction mixture was heated with stirring to 70°C. After the solids had been dissolved, the mixture was further maintained at 70°C for 1 hour. The reaction mixture was cooled to -5°C, 40ml of TiCl₄ was added dropwise thereto, and then 4.5 ml of γ-methacryloxypropyltriethoxysilane was added thereto. The reaction mixture was allowed to react for 1 hour, and then heated slowly to 80°C and further maintained at that temperature for 2 hours. The stirrer was stopped, and solids in the reaction mixture settled down quickly. Supernatant was filtered off. The residual solids were washed with toluene twice and with hexane four times, and then dried under a high pure N₂ flow, to give a free flowing solid catalyst component. The composition of the catalyst component is shown in Table 1 below.

An ethylene polymerization was carried out according to the procedure described in Example 1. The results are shown in Table 2 below.

### Example 5

A catalyst component was prepared according to the procedure described in Example 4, except that the amount of γ-methacryloxypropyltriethoxysilane was changed to 6.0ml. The composition of the catalyst component is shown in Table 1 below.

An ethylene polymerization was carried out according to the procedure described in Example 1. The results are shown in Table 2 below.

### Example 6

A catalyst component was prepared according to the procedure described in Example 4, except that the amount of γ-methacryloxypropyltriethoxysilane was changed to 7.5ml. The composition of the catalyst component is shown in Table 1 below.

An ethylene polymerization was carried out according to the procedure described in Example 1. The results are shown in Table 2 below.

### Example 7

A catalyst component was prepared according to the procedure described in Example 4, except that the amount of γ-methacryloxypropyltriethoxysilane was changed to 8.6ml. The composition of the catalyst component is shown in Table 1 below.

An ethylene polymerization was carried out according to the procedure described in Example 1. The results are shown in Table 2 below.

### Example 8

A catalyst component was prepared according to the procedure described in Example 4, except that the γ-methacryloxypropyltriethoxysilane was replaced with 4.5 ml of γ -methacryloxypropyltrimethoxysilane. The composition of the catalyst component is shown in Table 1 below.

An ethylene polymerization was carried out according to the procedure described in Example 1. The results are shown in Table 2 below.

### Example 9

A catalyst component was prepared according to the procedure described in Example 4, except that the 4.5 ml of γ -methacryloxypropyltriethoxysilane was replaced with 3.0 ml of γ-(2,3-epoxypropoxy)propyltriethoxysilane. The composition of the catalyst component is shown in Table 1 below.

An ethylene polymerization was carried out according to the procedure described in Example 1. The results are shown in Table 2 below.

### Example 10

A catalyst component was prepared according to the procedure described in Example 9, except that the γ-(2,3-epoxypropoxy)propyltriethoxysilane was replaced with 3.0 ml of γ -(2,3-epoxypropoxy)propyltrimethoxysilane. The composition of the catalyst component is shown in Table 1 below.

An ethylene polymerization was carried out according to the procedure described in Example 1. The results are shown in Table 2 below.

### Example 11

To a reactor, in which air had been repeatedly replaced with high pure N₂, were charged successively with 4.03 g of anhydrous magnesium dichloride, 50 ml of toluene, 2.0 ml of epoxy chloropropane, 6.0 ml of tributyl borate, and 3.4ml of ethanol. The reaction mixture was heated with stirring to 68°C. After the solids had been dissolved, the mixture was further maintained at 68°C for 1 hour. The reaction mixture was cooled to -5°C, 60ml of TiCl₄ was added dropwise thereto, and then 4.5 ml of γ-chloropropyltriethoxysilane was added thereto. The reaction mixture was allowed to react for 1 hour, and then heated slowly to 80°C and further maintained at that temperature for 2 hours. The stirrer was stopped, and solids in the reaction mixture settled down quickly. Supernatant was filtered off. The residual solids were washed with toluene twice and with hexane four times, and then dried under a high pure N₂ flow, to give a free flowing solid catalyst component. The composition of the catalyst component is shown in Table 1 below.

An ethylene polymerization was carried out according to the procedure described in Example 1. The results are shown in Table 2 below.

### Example 12

To a reactor, in which air had been repeatedly replaced with high pure N₂, were charged successively with 4.0 g of anhydrous magnesium dichloride, 50 ml of toluene, 6.0 ml of epoxy chloropropane, 4.0 ml of tributyl phosphate, and 5.6ml of ethanol. The reaction mixture was heated with stirring to 70°C. After the solids had been dissolved, the mixture was further maintained at 70°C for I hour. The reaction mixture was cooled to 30°C, 4.8 ml of 2.2 M solution of diethyl aluminum chloride in hexane was added dropwise thereto, and the mixture was allowed to react at 30°C for 1 hour. Then the reaction mixture was cooled to -5°C, 40ml of TiCl₄ was added dropwise thereto, and then 3.0 ml of γ-(N,N-dimethylaminopropyl) triethoxysilane was added thereto. The reaction mixture was allowed to react for 1 hour, and then heated slowly to 80°C and further maintained at that temperature for 2 hours. The stirrer was stopped, and solids in the reaction mixture settled down quickly. Supernatant was filtered off. The residual solids were washed with toluene twice and with hexane four times, and then dried under a high pure N₂ flow, to give a free flowing solid catalyst component. The composition of the catalyst component is shown in Table 1 below.

### Comparative Example 1

A catalyst component was prepared according to the procedure described in Example 1, except that the γ-(N,N-dimethylaminopropyl)triethoxy silane was replaced with 2.0g of phthalic anhydride. The composition of the catalyst component is shown in Table 1 below.

An ethylene polymerization was carried out according to the procedure described in Example 1. The results are shown in Table 2 below.

### Comparative Example 2

To a reactor, in which air had been repeatedly replaced with high pure N₂, were charged successively with 4.0 g of anhydrous magnesium dichloride, 50 ml of toluene, 6.0 ml of epoxy chloropropane, 6.0 ml of tributyl borate, and 5.6ml of ethanol. The reaction mixture was heated with stirring to 70°C. After the solids had been dissolved, the mixture was further maintained at 70°C for 1 hour. The reaction mixture was cooled to -5°C, and 40ml of TiCl₄ was added dropwise thereto. The reaction mixture was allowed to react for 1 hour, and then heated slowly to 80°C and further maintained at that temperature for 2 hours. The stirrer was stopped, and it was observed that solids in the reaction mixture were difficult to settle down. When the reaction mixture was filtered through 400 mesh Nylon cloth, no solid catalyst component was obtained.

**Table 1 Composition of Catalysts**

| No. | Ti (wt%) | Mg (wt%) | Cl (wt%) | Si (wt%) | OR (wt%) |
|---|---|---|---|---|---|
| Ex. 1 | 6.5 | 16.0 | 58.8 | 0.2 | 6.7 |
| Ex. 2 | 5.9 | 16.0 | 58.0 | 0.2 | 6.4 |
| Ex. 3 | 6.3 | 15.6 | 59.0 | 0.3 | 6.5 |
| Ex. 4 | 5.8 | 16.1 | 60.8 | 0.3 | 6.3 |
| Ex. 5 | 5.9 | 17.0 | 59.0 | 0.2 | 6.1 |
| Ex. 6 | 5.8 | 16.2 | 61.0 | 0.3 | 5.9 |
| Ex. 7 | 6.0 | 16.0 | 60.0 | 0.4 | 6.4 |
| Ex. 8 | 6.1 | 16.8 | 62.0 | 0.2 | 6.3 |
| Ex. 9 | 5.9 | 16.0 | 60.0 | 0.4 | 6.3 |
| Ex. 10 | 6.2 | 16.0 | 60.0 | 0.3 | 6.3 |
| Ex. 11 | 6.0 | 16.0 | 59.9 | 0.3 | 6.2 |
| Ex. 12 | 6.5 | 16.0 | 58.8 | 0.2 | 6.7 |
| Comp. Ex. 1 | 5.5 | 16.0 | 60.0 | / | / |

**Table 2 Performance of Catalysts**

| No. | Activity* 10⁴gPE/gcat | BD g/cm⁻³ | MI_{2.16}** g/10min | Particle Size Distribution (mesh) | | | |
|---|---|---|---|---|---|---|---|
| | | | | <20 | 20-100 | 100-200 | >200 |
| Ex. 1 | 4.8 | 0.33 | 0.61 | 0.8 | 63.4 | 35.1 | 0.7 |
| Ex. 2 | 4.3 | 0.32 | 0.55 | 1.3 | 64.3 | 33.8 | 0.6 |
| Ex. 3 | 4.2 | 0.31 | 0.63 | 0.5 | 64.2 | 34.3 | 1.0 |
| Ex. 4 | 4.1 | 0.33 | 0.80 | 1.3 | 65.6 | 32.8 | 0.3 |
| Ex. 5 | 4.6 | 0.32 | 0.78 | 2.6 | 62.2 | 34.0 | 1.2 |
| Ex. 6 | 4.5 | 0.31 | 0.66 | 4.1 | 69.5 | 35.6 | 0.8 |
| Ex. 7 | 4.3 | 0.32 | 0.61 | 0.7 | 66.5 | 32.1 | 0.7 |
| Ex. 8 | 4.2 | 0.31 | 0.67 | 2.2 | 61.7 | 35.2 | 0.9 |
| Ex. 9 | 4.1 | 0.36 | 0.70 | 0.5 | 63.9 | 35.3 | 0.3 |
| Ex. 10 | 4.9 | 0.35 | 0.59 | 1.7 | 58.0 | 39.9 | 0.4 |
| Ex. 11 | 4.3 | 0.32 | 0.61 | 1.6 | 57.9 | 40.1 | 0.4 |
| Ex. 12 | 4.8 | 0.38 | 0.60 | 0.8 | 63.4 | 35.1 | 0.7 |
| Comp. Ex. 1 | 4.0 | 0.30 | 0.42 | 12.1 | 47.9 | 37.8 | 2.2 |

| | | | | | | | |
|---|---|---|---|---|---|---|---|
| *Polymerization conditions: temperature: 80 °C; pressure: 0.73MPa; H₂/C₂H₄=0.28/0.45 **Measured according to ASTM D1238-99, at 190 °C and 2.16kg load. | | | | | | | |

It can be seen from the data shown in Table 2 that the catalysts according to the invention have higher activities and give polymer powders having narrower particle size distribution and fewer fines, compared with the catalyst of Comparative Example 1.

## Claims

1. A catalyst component for ethylene polymerization, comprising a reaction product of
(1) a magnesium complex, which is a solution of a magnesium halide in a solvent system;
(2) at least one titanium compound of formula Ti(OR)ₐX_{b}, wherein R is independently a C₁-C₁₄ hydrocarbyl, X is independently a halogen, a is 0, 1, 2, 3 or 4, b is 1, 2, 3 or 4, and a+b=3 or 4; and
(3) at least one organic silicon compound of formula (I): 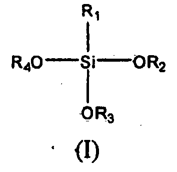
wherein R₁ is a C₃-C₂₀ aliphatic hydrocarbyl, which is substituted with at least one substituent chosen from halogens, C₁-C₆ acyloxy groups, epoxy, amino, C₁-C₆ alkylamino groups, di(C₁-C₆ alkyl)amino groups, C₁-C₆ alkoxy groups, glycidoxy, and oxo group; R₂, R₃ and R₄ are independently a C₁-C₁₀ aliphatic hydrocarbyl, a C₃-C₁₀ alicyclic hydrocarbyl, a C₆-C₁₀ aryl, a C₇-C₁₀ aralkyl, or a C₇-C₁₀ alkaryl,
wherein the solvent system is one comprising at least one organic epoxy compound, at least one organic boron compound, at least one alcohol, and optionally at least one inert diluent, or one comprising at least one organic epoxy compound, at least one organophosphorus compound, at least one alcohol, and optionally at least one inert diluent, and
wherein the at least one alcohol is chosen from optionally halogenated linear alkyl alcohols having from 1 to 10 carbon atoms, optionally halogenated branched alkyl alcohols having from 3 to 10 carbon atoms, optionally halogenated cycloalkyl alcohols having from 3 to 10 carbon atoms, optionally halogenated aryl alcohols having from 6 to 20 carbon atoms, optionally halogenated aralkyl alcohols having from 7 to 20 carbon atoms, optionally halogenated alkaryl alcohols having from 7 to 20 carbon atoms, and mixtures thereof.

2. The catalyst component of claim 1, wherein the solvent system comprises at least one organic epoxy compound, at least one organic boron compound, the at least one alcohol, and optionally at least one inert diluents, and wherein the at least one organic boron compound is of formula (II): 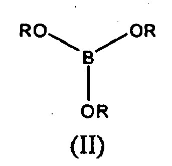 wherein R is independently a C₁-C₂₀ linear alkyl, a C₃-C₂₀ branched alkyl, a C₃-C₂₀ cycloalkyl, a C₆-C₂₀ aryl, a C₇-C₂₀ aralkyl, or a C₇-C₂₀ alkaryl.

3. The catalyst component of claim 2, wherein in the formula (II), R is independently a C₁-C₂₀ linear alkyl.

4. The catalyst component of claim 1, wherein the at least one organic epoxy compound is chosen from aliphatic epoxy compounds and diepoxy compounds, halogenated aliphatic epoxy compounds and diepoxy compounds, glycidyl ether, and inner ethers, which each comprise from 2 to 8 carbon atoms.

5. The catalyst component of claim 1, wherein the solvent system comprises at least one organic epoxy compound, at least one organophosphorus compound, the at least one alcohol, and optionally at least one inert diluents, and wherein the at least one organophosphorus compound is chosen from hydrocarbyl esters of phosphoric acid, halogenated hydrocarbyl esters of phosphoric acid, hydrocarbyl esters of phosphorous acid, and halogenated hydrocarbyl esters of phosphorous acid.

6. The catalyst component of claim 1, wherein in the formula (I), R₁ is a C₃-C₂₀ linear or branched alkyl group, which is substituted with at least one substituent chosen from Cl, Br, C₁-C₆ acyloxy groups, epoxy, amino, C₁-C₆ alkylamino groups, di(C₁-C₆ alkyl)amino groups, C₁-C₆ alkoxy groups, glycidoxy, and oxo group; and R₂, R₃ and R₄ are independently a C₁-C₁₀ linear alkyl, a C₃-C₁₀ branched alkyl, or a C₃-C₁₀ cycloalkyl.

7. The catalyst component of claim 1, wherein the at least one organic silicon compound is chosen from γ-chloropropyltrimethoxysilane, γ-chlorobutyltrimethoxysilane, γ-chlorohexyltrimethoxysilane, γ-chlorooctyltrimethoxysilane, γ-chloropropyltriethoxysilane, γ-chlorobutyltriethoxysilane, γ-chlorohexyltriethoxysilane, γ-chlorooctyltriethoxysilane, γ-chloropropyltributoxysilane, γ-chlorobutyltributoxysilane, γ-chlorohexyltributoxysilane, γ-chlorooctyltributoxysilane, γ-acryloxypropyltrimethoxysilane, γ-acryloxybutyltrimethoxysilane, γ-acryloxyhexyltrimethoxysilane, γ-acryloxyoctyltrimethoxysilane, γ-acryloxypropyltriethoxysilane, γ-acryloxybutyltriethoxysilane, γ-acryloxyhexyltriethoxysilane, γ-acryloxyoctyltriethoxysilane, γ-acryloxypropyltributoxysilane, γ-acryloxybutyltributoxysilane, γ-acryloxyhexyltributoxysilane, γ-acryloxyoctyltributoxysilane, γ-methacryloxypropyltrimethoxysilane, γ-methacryloxybutyltrimethoxysilane, γ-methacryloxyhexyltrimethoxysilane, γ-methacryloxyoctyltrimethoxysilane, γ-methacryloxypropyltriethoxysilane, γ-methacryloxybutyltriethoxysilane, γ-methacryloxyhexyltriethoxysilane, γ-methacryloxyoctyltriethoxysilane, γ-methacryloxypropyltributoxysilane, γ-methacryloxybutyltributoxysilane, γ-methacryloxyhexyltributoxysilane, γ-methacryloxyoctyltributoxysilane, γ-(2,3-epoxypropoxy)propyltrimethoxysilane, γ-(2,3-epoxypropoxy)butyltrimethoxysilane, γ-(2,3-epoxypropoxy)hexyltrimethoxysilane, γ-(2,3-epoxypropoxy)octyltrimethoxysilane, γ-(2,3-epoxypropoxy)propyltriethoxysilane, γ-(2,3-epoxypropoxy)butyltriethoxysilane, γ-(2,3-epoxypropoxy)hexyltriethoxysilane, γ-(2,3-epoxypropoxy)octyltriethoxysilane, γ-(2,3-epoxypropoxy)propyltributoxysilane, γ-(2,3-epoxypropoxy)butyltributoxysilane, γ-(2,3-epoxypropoxy)hexyltributoxysilane, γ-(2,3-epoxypropoxy)octyltributoxysilane, γ-(N,N-dimethylaminopropyl)trimethoxysilane, γ-(N,N-diethylaminopropyl)trimethoxysilane, γ-(N,N-dipropylaminopropyl)trimethoxysilane, γ-(N,N-dibutylaminopropyl)trimethoxysilane, γ-(N,N-dimethylaminopropyl)triethoxysilane, γ-(N,N-diethylaminopropyl)triethoxysilane, γ-(N,N-dipropylaminopropyl)triethoxysilane, γ-(N,N-dibutylaminopropyl)triethoxysilane, γ-(N,N-dimethylaminopropyl)tributoxysilane, γ-(N,N-diethylaminopropyl)tributoxysilane, γ-(N,N-dipropylaminopropyl)tributoxysilane, γ-(N,N-dibutylaminopropyl)tributoxysilane, γ-(N,N-dimethylaminopropyl)trihexyloxysilane, γ-(N,N-diethylaminopropyl)trihexyloxysilane, γ-(N,N-dipropylaminopropyl)trihexyloxysilane, γ-(N,N-dibutylaminopropyl)trihexyloxysilane, γ-(N,N-dimethylaminopropyl)trioctyloxysilane, γ-(N,N-diethylaminopropyl)trioctyloxysilane, γ-(N,N-dipropylaminopropyl)trioctyloxysilane, γ-(N,N-dibutylaminopropyl)trioctyloxysilane, and mixtures thereof.

8. The catalyst component of claim 1, wherein the magnesium halide is chosen from magnesium dihalides, hydrates of magnesium dihalides, alcohol complexes of magnesium dihalides, derivatives of magnesium dihalides wherein one halogen atom in the magnesium dihalides is replaced with an alkoxy or a halogenated alkoxy, and mixtures thereof.

9. The catalyst component of claim 1, wherein relative to one mole of the magnesium halide in the component (1), the amounts of the individual substance used are as follows: 1.0 to 15.0 moles for the organic epoxy compound, 0.1 to 10.0 moles for the organic boron compound or the organophosphorus compound, 0.05-1.0 moles for the alcohol compound, 1.0-15.0 moles for the organic silicon compound, and 0.5-10.0 moles for the titanium compound.

10. A process for preparing the catalyst component of any of claims 1-9, comprising the steps of
(1) dissolving a magnesium halide in a solvent system to form a solution;
(2) combining the solution from step (1) with the at least one titanium compound and the at least one organic silicon compound at a temperature ranging from -40 to 10°C, to form a mixture;
(3) heating the mixture to a temperature ranging from 40 to 120°C and maintaining at that temperature for a period of time, to precipitate solids; and
(4) recovering the solids as the catalyst component,
wherein the solvent system is one comprising at least one organic epoxy compound, at least one organic boron compound, at least one alcohol, and optionally at least one inert diluent, or one comprising at least one organic epoxy compound, at least one organophosphorus compound, at least one alcohol, and optionally at least one inert diluents, and
wherein the at least one alcohol is chosen from optionally halogenated linear alkyl alcohols having from 1 to 10 carbon atoms, optionally halogenated branched alkyl alcohols having from 3 to 10 carbon atoms, optionally halogenated cycloalkyl alcohols having from 3 to 10 carbon atoms, optionally halogenated aryl alcohols having from 6 to 20 carbon atoms, optionally halogenated aralkyl alcohols having from 7 to 20 carbon atoms, optionally halogenated alkaryl alcohols having from 7 to 20 carbon atoms, and mixtures thereof.

11. The process of claim 10, wherein the temperature for the dissolution ranges from 40 to 100 °C.

12. A catalyst for ethylene polymerization, comprising a reaction product of:
(1) the catalyst component of any of claims 1 to 9; and
(2) at least one organic aluminum compound of formula AlRₙX₃₋ₙ, wherein R is independently a C₁-C₂₀ hydrocarbyl, X is independently hydrogen or a halogen, and n has a value satisfying 1<n≤3.

13. A process for the polymerization of ethylene, comprising
(i) contacting, under polymerization conditions, ethylene and optionally at least one
α-olefin having from 3 to 20 carbon atoms as a comonomer with the catalyst of claim 12; and
(ii) recovering the resulting polymer.

## Patentansprüche

1. Katalysatorkomponente für Ethylenpolymerisation, umfassend ein Reaktionsprodukt aus
(1) einem Magnesiumkomplex, der eine Lösung aus einem Magnesiumhalogenid in einem Lösungsmittelsystem ist;
(2) zumindest eine von einer Titanverbindung der Formel Ti(OR)ₐX_{b}, worin R unabhängig ein C₁₋₁₄-Hydrocarbyl ist, X unabhängig ein Halogen ist, a 0, 1, 2, 3 oder 4 ist, b 1, 2, 3 oder 4 ist und a + b = 3 oder 4; und
(3) zumindest einer organischen Siliziumverbindung der Formel (I) : 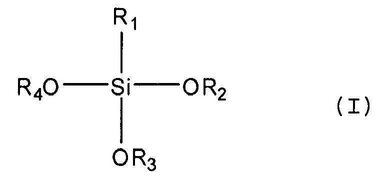 worin R₁ ein C₃₋₂₀-alphatisches Hydrocarbyl ist,
das substituiert ist mit zumindest einem Substituent, ausgewählt aus Halogenen, C₁₋₆-Acyloxygruppen, Epoxy, Amino, C₁₋₆-Alkylaminogruppen, Di(C₁₋₆-alkyl)aminogruppen, C₁₋₆-Alkoxygruppen, Glycidoxy und Oxogruppen, R₂, R₃ und R₄ unabhängig ein C₁₋₁₀-aliphatisches Hydrocarbyl, C₃₋₁₀-alicyclisches Hydrocarbyl, C₆₋₁₀-Aryl, C₇₋₁₀-Aralkyl oder C₇₋₁₀-Alkaryl sind,
worin das Lösungsmittelsystem eines ist, umfassend zumindest eine organische Epoxyverbindung, zumindest eine organische Borverbindung, zumindest einen Alkohol und wahlweise zumindest ein inertes Verdünnungsmittel, oder eines ist, umfassend zumindest eine organische Epoxyverbindung, zumindest eine Organophosphorverbindung, zumindest einen Alkohol und wahlweise zumindest ein inertes Verdünnungsmittel, und
worin der zumindest eine Alkohol ausgewählt ist aus wahlweise halogenierten linearen Alkylalkoholen mit 1 bis 10 Kohlenstoffatomen, wahlweise halogenierten verzweigten Alkylalkoholen mit 3 bis 10 Kohlenstoffatomen, wahlweise halogenierten Cycloalkylalkoholen mit 3 bis 10 Kohlenstoffatomen, wahlweise halogenierten Arylalkoholen mit 6 bis 20 Kohlenstoffatomen, wahlweise halogenierten Aralkylalkoholen mit 7 bis 20 Kohlenstoffatomen, wahlweise halogenierten Alkarylalkoholen mit 7 bis 20 Kohlenstoffatomen, und Mischungen davon.

2. Katalysatorkomponente nach Anspruch 1, worin das Lösungsmittelsystem zumindest eine organische Epoxyverbindung, zumindest eine organische Borverbindung, den zumindest einen Alkohol und wahlweise zumindest ein inertes Verdünnungsmittel enthält und worin die zumindest eine organische Borverbindung die Formel (II) hat: 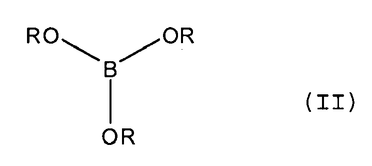 worin R unabhängig C₁₋₂₀-lineares Alkyl, C₃₋₂₀-verzweigtes Alkyl, C₃₋₂₀-Cycloalkyl, C₆₋₂₀-Aryl, C₇₋₂₀-Aralkyl oder C₇₋₂₀-Alkaryl ist.

3. Katalysatorkomponente nach Anspruch 2, worin in der Formel (II) R unabhängig ein C₁₋₂₀-lineares Alkyl ist.

4. Katalysatorkomponente nach Anspruch 1, worin die zumindest eine organische Epoxyverbindung ausgewählt ist aus aliphatischen Epoxyverbindungen und Diepoxyverbindungen, halogenierten aliphatischen Epoxyverbindungen und Diepoxyverbindungen, Glycidylether und inneren Ethern, die jeweils 2 bis 8 Kohlenstoffatome enthalten.

5. Katalysatorkomponente nach Anspruch 1, worin das Lösungsmittelsystem zumindest eine organische Epoxyverbindung, zumindest eine Organophosphorverbindung, den zumindest einen Alkohol und wahlweise zumindest ein inertes Verdünnungsmittel enthält und worin die zumindest eine Organophosphorverbindung ausgewählt ist aus Hydrocarbylestern von Phosphorsäure, halogenierten Hydrocarbylestern von Phosphorsäure, Hydrocarbylestern von phosphoriger Säure und halogenierten Hydrocarbylestern von phosphoriger Säure.

6. Katalysatorkomponente nach Anspruch 1, worin in der Formel (I) R₁ eine C₃₋₂₀-lineare oder verzweigte Alkylgruppe ist, die mit zumindest einem Substituenten substituiert ist, ausgewählt aus Cl, Br, C₁₋₆-Acyloxygruppen, Epoxy, Amino, C₁₋₆-Alkylaminogruppen, Di(C₁₋₆-alkyl)aminogruppen, C₁₋₆-Alkoxygruppen, Glycidoxy und Oxogruppe; und R₂, R₃ und R₄ unabhängig C₁₋₁₀-lineares Alkyl, C₃₋₁₀-verzweigtes Alkyl oder C₃₋₁₀-Cycloalkyl sind.

7. Katalysatorkomponente nach Anspruch 1, worin die zumindest eine Organosiliziumverbindung ausgewählt ist aus γ-Chlorpropyltrimethoxysilan, γ-Chlorbutyltrimethoxysilan, γ-Chlorhexyltrimethoxysilan, γ-Chloroctyltrimethoxysilan, γ-Chlorpropyltriethoxysilan, γ-Chlorbutyltriethoxysilan, γ-Chlorhexyltriethoxysilan, γ-Chloroctyltriethoxysilan, γ-Chlorpropyltributoxysilan, γ-Chlorbutyltributoxysilan, γ-Chlorhexyltributoxysilan, γ-Chloroctyltributoxysilan,
γ-Acryloxypropyltrimethoxysilan, γ-Acryloxybutyltrimethoxysilan, γ-Acryloxyhexyltrimethoxysilan, γ-Acryloxyoctyltrimethoxysilan, γ-Acryloxypropyltriethoxysilan, γ-Acryloxybutyltriethoxysilan, γ-Acryloxyhexyltriethoxysilan, γ-Acryloxyoctyltriethoxysilan, γ-Acryloxypropyltributoxysilan, γ-Acryloxybutyltributoxysilan, γ-Acryloxyhexyltributoxysilan, γ-Acryloxyoctyltributoxysilan, γ-Methacryloxypropyltrimethoxysilan, γ-Methacryloxybutyltrimethoxysilan, γ-Methacryloxyhexyltrimethoxysilan, γ-Methacryloxyoctyltrimethoxysilan, γ-Methacryloxypropyltriethoxysilan, γ-Methacryloxybutyltriethoxysilan, γ-Methacryloxyhexyltriethoxysilan, γ-Methacryloxyoctyltriethoxysilan, γ-Methacryloxypropyltributoxysilan, γ-Methacryloxybutyltributoxysilan, γ-Methacryloxyhexyltributoxysilan, γ-Methacryloxyoctyltributoxysilan, γ-(2,3-Epoxypropoxy)propyltrimethoxysilan, γ-(2,3-Epoxypropoxy)butyltrimethoxysilan, γ-(2,3-Epoxypropoxy)hexyltrimethoxysilan, γ-(2,3-Epoxypropoxy)octyltrimethoxysilan, γ-(2,3-Epoxypropoxy)propyltriethoxysilan, γ-(2,3-Epoxypropoxy)butyltriethoxysilan, γ-(2,3-Epoxypropoxy)hexyltriethoxysilan, γ-(2,3-Epoxypropoxy)octyltriethoxysilan, γ-(2,3-Epoxypropoxy)propyltributoxysilan, γ-(2,3-Epoxypropoxy)butyltributoxysilan, γ-(2,3-Epoxypropoxy)hexyltributoxysilan, γ-(2,3-Epoxypropoxy)octyltributoxysilan, γ-(N,N-Dimethylaminopropyl)trimethoxysilan,
γ-(N,N-Diethylaminopropyl)trimethoxysilan, γ-(N,N-Dipropylaminopropyl)trimethoxysilan, γ-(N,N-Dibutylaminopropyl)trimethoxysilan, γ-(N,N-Dimethylaminopropyl)triethoxysilan, γ-(N,N-Diethylaminopropyl)triethoxysilan, γ-(N,N-Dipropylaminopropyl)triethoxysilan, γ-(N,N-Dibutylaminopropyl)triethoxysilan, γ-(N,N-Dimethylaminopropyl)tributoxysilan, γ-(N,N-Diethylaminopropyl)tributoxysilan, γ-(N,N-Dipropylaminopropyl)tributoxysilan, γ-(N,N-Dibutylaminopropyl)tributoxysilan, γ-(N,N-Dimethylaminopropyl)trihexyloxysilan, γ-(N,N-Diethylaminopropyl)trihexyloxysilan, γ-(N,N-Dipropylaminopropyl)trihexyloxysilan, γ-(N,N-Dibutylaminopropyl)trihexyloxysilan, γ-(N,N-Dimethylaminopropyl)trioctyloxysilan, γ-(N,N-Diethylaminopropyl)trioctyloxysilan, γ-(N,N-Dipropylaminopropyl)trioctyloxysilan, γ-(N,N-Dibutylaminopropyl)trioctyloxysilan und Mischungen davon.

8. Katalysatorkomponente nach Anspruch 1, worin das Magnesiumhalogenid ausgewählt ist aus Magnesiumdihalogeniden, Hydraten von Magnesiumdihalogeniden, Alkoholkomplexen von Magnesiumdihalogeniden, Derivaten von Magnesiumhalogeniden, worin ein Halogenatom in den Magnesiumdihalogeniden mit einem Alkoxy oder halogenierten Alkoxy ersetzt ist, und Mischungen davon.

9. Katalysatorkomponente nach Anspruch 1, worin bezogen auf 1 Mol des Magnesiumhalogenides in der Komponente (1) die Mengen der verwendeten individuellen Substanz wie folgt sind: 1,0-15,0 Mol der organischen Epoxyverbindung, 0,1-10,0 Mol der organischen Borverbindung oder der Organophosphorverbindung, 0,05-1,0 Mol der Alkoholverbindung, 1,0-15,0 Mol der organischen Siliziumverbindung und 0,5-10,0 Mol der Titanverbindung.

10. Verfahren zur Herstellung der Katalysatorkomponente nach einem der Ansprüche 1 bis 9, umfassend die Schritte:
(1) Auflösen eines Magnesiumhalogenides in einem Lösungsmittelsystem zur Bildung einer Lösung;
(2) Kombinieren der Lösung von Schritt (1) mit der zumindest einen Titanverbindung und der zumindest einen organischen Siliziumverbindung bei einer Temperatur im Bereich von -40 bis 10°C, zur Bildung einer Mischung;
(3) Erwärmen der Mischung auf eine Temperatur im Bereich von 40 bis 120°C und Halten bei dieser Temperatur für eine Zeitperiode, zum Ausfällen von Feststoffen; und
(4) Wiedergewinnung der Feststoffe als Katalysatorkomponente,
worin das Lösungsmittelsystem eines ist, umfassend zumindest eine organische Epoxyverbindung, zumindest eine organische Borverbindung, zumindest einen Alkohol und wahlweise zumindest ein inertes Verdünnungsmittel, oder eines ist, umfassend zumindest eine organische Epoxyverbindung, zumindest eine Organophosphorverbindung, zumindest einen Alkohol und wahlweise zumindest ein inertes Verdünnungsmittel, und
worin der zumindest eine Alkohol ausgewählt ist aus wahlweise halogenierten linearen Alkylalkoholen mit 1 bis 10 Kohlenstoffatomen, wahlweise halogenierten verzweigten Alkylalkoholen mit 3 bis 10 Kohlenstoffatomen, wahlweise halogenierten Cycloalkylalkoholen mit 3 bis 10 Kohlenstoffatomen, wahlweise halogenierten Arylalkoholen mit 6 bis 20 Kohlenstoffatomen, wahlweise halogenierten Aralkylalkoholen mit 7 bis 20 Kohlenstoffatomen, wahlweise halogenierten Alkarylalkoholen mit 7 bis 20 Kohlenstoffatomen und Mischungen davon.

11. Verfahren nach Anspruch 10, worin die Temperatur für die Auflösung im Bereich von 40 bis 100°C liegt.

12. Katalysator für die Ethylenpolymerisation, umfassend ein Reaktionsprodukt aus:
(1) der Katalysatorkomponente nach einem der Ansprüche 1 bis 9; und
(2) zumindest einer organischen
Aluminiumverbindung der Formel AlRₙX₃₋ₙ, worin R unabhängig ein C₁₋₂₀-Hydrocarbyl ist, X unabhängig Wasserstoff oder Halogen ist und n einen Wert hat, der 1 < n ≤ 3 erfüllt.

13. Verfahren zur Polymerisation von Ethylen, umfassend
(i) Kontaktieren von Ethylen und wahlweise zumindest einem α-olefin mit 3 bis 20 Kohlenstoffatomen als Comonomer mit dem Katalysator nach Anspruch 12 unter Polymerisationsbedingungen, und
(ii) Wiedergewinnung des resultierenden Polymers.

## Revendications

1. Composant de catalyseur pour la polymérisation de l'éthylène, comprenant un produit de réaction de
(1) un complexe de magnésium, qui est une solution d'un halogénure de magnésium dans un système de solvant ;
(2) au moins un composé de titane de formule Ti(OR)ₐX_{b}, dans lequel R est indépendamment un hydrocarbyle en C₁-C₁₄, X est indépendamment un atome d'halogène, a vaut 0, 1, 2, 3 ou 4, b vaut 1, 2, 3 ou 4, et a+b=3 ou 4 ; et
(3) au moins un composé de silicium organique de formule (I) : 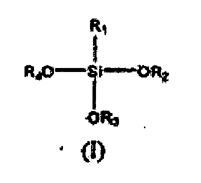 dans laquelle R₁ est un hydrocarbyle aliphatique en C₃-C₂₀, qui est substitué par au moins un substituant choisi parmi les halogènes, les groupes acyloxy en C₁-C₆, époxy, amino, les groupes alkylamino en C₁-C₆, les groupes di(alkyle en C₁-C₆)amino, les groupes alcoxy en C₁-C₆, glycidoxy, et un groupe oxo ; R₂, R₃ et R₄ sont indépendamment un hydrocarbyle aliphatique en C₁-C₁₀, un hydrocarbyle alicyclique en C₃-C₁₀, un aryle en C₆-C₁₀, un aralkyle en C₇-C₁₀, ou un alkaryle en C₇-C₁₀.
dans lequel le système de solvant est un comprenant au moins un composé époxy organique, au moins un composé organique du bore, au moins un alcool, et éventuellement au moins un diluant inerte, ou un comprenant au moins un composé époxy organique, au moins un composé organophosphoré, au moins un alcool, et éventuellement au moins un diluant inerte, et
dans lequel le au moins un alcool est choisi parmi les alcools alkyliques linéaires éventuellement halogénés ayant de 1 à 10 atomes de carbone, les alcools alkyliques ramifiés éventuellement halogénés ayant de 3 à 10 atomes de carbone, les alcools cycloalkyliques éventuellement halogénés ayant de 3 à 10 atomes de carbone, les alcools aryliques éventuellement halogénés ayant de 6 à 20 atomes de carbone, les alcools aralkyliques éventuellement halogénés ayant de 7 à 20 atomes de carbone, les alcools alkaryliques éventuellement halogénés ayant de 7 à 20 atomes de carbone, et les mélanges de ceux-ci.

2. Composant de catalyseur selon la revendication 1, dans lequel le système de solvant comprend au moins un composé époxy organique, au moins un composé de bore organique, le au moins un alcool, et éventuellement au moins un diluant inerte, et dans lequel le au moins un composé de bore organique est de formule (II) : 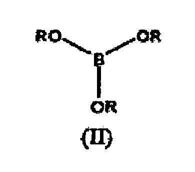 dans laquelle R est indépendamment un alkyle linéaire en C₁-C₂₀, un alkyle ramifié en C₃-C₂₀, un cycloalkyle en C₃-C₂₀, un aryle en C₆-C₂₀, un aralkyle en C₇-C₂₀, ou un alkaryle en C₇-C₂₀.

3. Composant de catalyseur selon la revendication 2, dans lequel dans la formule (II), R est indépendamment un alkyle linéaire en C₁-C₂₀.

4. Composant de catalyseur selon la revendication 1, dans lequel le au moins un composé époxy organique est choisi parmi les composés époxy aliphatiques et les composés diépoxy, les composés époxy aliphatiques halogénés et les composés diépoxy, un éther de glycidyle, et les éthers internes, qui comportent chacun de 2 à 8 atomes de carbone.

5. Composant de catalyseur selon la revendication 1, dans lequel le système de solvant comprend au moins un composé époxy organique, au moins un composé organophosphoré, le au moins un alcool, et éventuellement au moins un diluant inerte, et dans lequel le au moins un composé organophosphoré est choisi parmi les esters d'hydrocarbyle de l'acide phosphorique, les esters d'hydrocarbyle halogénés de l'acide phosphorique, les esters d'hydrocarbyle de l'acide phosphoreux, et les esters d'hydrocarbyle halogénés de l'acide phosphoreux.

6. Composant de catalyseur selon la revendication 1, dans lequel, dans la formule (1), R₁ est un groupe alkyle linéaire ou ramifié en C₃-C₂₀, qui est substitué par au moins un substituant choisi parmi Cl, Br, les groupes acyloxy en C₁-C₆, époxy, amino, les groupes alkylamino en C₁-C₆, les groupes di(alkyle en C₁-C₆)amino, les groupes alcoxy en C₁-C₆, glycidoxy, et un groupe oxo ; et R₂, R₃ et R₄ sont indépendamment un alkyle linéaire en C₁-C₁₀, un alkyle ramifié en C₃-C₁₀, ou un cycloalkyle en C₃-C₁₀.

7. Composant de catalyseur selon la revendication 1, dans lequel le au moins un composé de silicium organique est choisi parmi le γ-chloropropyltriméthoxysilane, γ-chlorobutyltriméthoxysilane, γ-chlorohexyltriméthoxysilane, γ-chlorooctyltriméthoxysilane, γ-chloropropyltriéthoxysilane, γ-chlorobutyltriéthoxysilane, γ-chlorohexyltriéthoxysilane, γ-chlorooctyltriéthoxysilane, γ-chloropropyltributoxysilane, γ-chlorobutyltributoxysilane, γ-chlorohexyltributoxysilane, γ-chlorooctyltributoxysilane, γ-acryloxypropyltriméthoxysilane, γ-acryloxybutyltriméthoxysilane, γ-acryloxyhexyltriméthoxysilane, γ-acryloxyoctyltriméthoxysilane, γ-acryloxypropyltriéthoxysilane, γ-acryloxybutyltriéthoxysilane, γ-acryloxyhexyltriéthoxysilane, γ-acryloxyoctyltriéthoxysilane, γ-acryloxypropyltributoxysilane, γ-acryloxybutyltributoxysilane, γ-acryloxyhexyltributoxysilane, γ-acryloxyoctyltributoxysilane, γ-méthacryloxypropyltriméthoxysilane, γ-méthacryloxybutyltriméthoxysilane, γ-méthacryloxyhexyltriméthoxysilane, γ-méthacryloxyoctyltriméthoxysilane, γ-méthacryloxypropyltriéthoxysilane, γ-méthacryloxybutyltriéthoxysilane, γ-méthacryloxyhexyltriéthoxysilane, γ-méthacryloxyoctyltriéthoxysilane, γ-méthacryloxypropyltributoxysilane, γ-méthacryloxybutyltributoxysilane, γ-méthacryloxyhexyltributaxysilane, γ-méthacryloxyoctyltributoxysilane, γ-(2,3-époxypropoxy)propyltriméthoxysilane, γ-(2,3-époxypropoxy)butyltriméthoxysilane, γ-(2,3-époxypropoxy)hexyltriméthoxysilane, γ-(2,3-époxypropoxy)octyltriméthoxysilane, γ-(2,3-époxypropoxy)propyltriéthoxysilane, γ-(2,3-époxypropoxy)butyltriéthoxysilane, γ-(2,3-époxypropoxy)hexyltriéthoxysilane, γ-(2,3-époxypropoxy)octyltriéthoxysilane, γ-(2,3-époxypropoxy)propyltributoxysilane, γ-(2,3-époxypropoxy)butyltributoxysilane, γ-(2,3-époxypropoxy)hexyltributoxysilane, γ-(2,3-époxypropoxy)octyltributoxysilane, γ-(N,N-diméthylaminopropyl)triméthoxysilane, γ-(N,N-diéthylaminopropyl)triméthoxysilane, γ-(N,N-dipropylaminopropyl)triméthoxysilane, γ-(N,N-dibutylaminopropyl)triméthoxysilane, γ-(N,N-diméthylaminopropyl)triéthoxysilane, γ-(N,N-diéthylaminopropyl)triéthoxysilane, γ-(N,N-dipropylaminopropyl)triéthoxysilane, γ-(N,N-dibutylaminopropyl)triéthoxysilane, γ-(N,N-diméthylaminopropyl)tributoxysilane, γ-(N,N-diéthylaminopropyl)tributoxysilane, γ-(N,N-dipropylaminopropyl)tributoxysilane, γ-(N,N-dibutylaminopropyl)tributoxysilane, γ-(N,N-diméthylaminopropyl)trihexyloxysilane, γ-(N,N-diéthylaminopropyl)trihexyloxysilane, γ-(N,N-dipropylaminopropyl)trihexyloxysilane, γ-(N,N-dibutylaminopropyl)trihexyloxysilane, γ-(N,N-diméthylaminopropyl)trioctyloxysilane, γ-(N,N-diéthylaminopropyl)trioctyloxysilane, γ-(N,N-dipropylaminopropyl)trioctyloxysilane, γ-(N,N-dibutylaminopropyl)trioctyloxysilane, et les mélanges de ceux-ci.

8. Composant de catalyseur selon la revendication 1, dans lequel l'halogénure de magnésium est choisi parmi les dihalogénures de magnésium, les hydrates de dihalogénures de magnésium, les complexes d'alcool de dihalogénures de magnésium, les dérivés de dihalogénures de magnésium dans lesquels un atome d'halogène dans les dihalogénures de magnésium est remplacé par un alcoxy ou un alcoxy halogéné, et les mélanges de ceux-ci.

9. Composant de catalyseur selon la revendication 1, dans lequel par rapport à une mole de l'halogénure de magnésium dans le composant (1), les quantités de la substance individuelle utilisée sont les suivantes : 1,0 à 15,0 moles pour le composé époxy organique, 0,1 à 10,0 moles pour le composé organique de bore ou le composé organophosphoré, 0,05 à 1,0 mole pour le composé d'alcool, 1,0 à 15,0 moles pour le composé de silicium organique, et 0,5 à 10,0 moles pour le composé de titane.

10. Procédé pour la préparation du composant de catalyseur selon l'une quelconque des revendications 1 à 9, comprenant les étapes de
(1) dissolution d'un halogénure de magnésium dans un système solvant pour former une solution ;
(2) combinaison de la solution de l'étape (1) avec le au moins un composé de titane et le au moins un composé de silicium organique à une température allant de -40 à 10°C, pour former un mélange ;
(3) chauffage du mélange à une température allant de 40 à 120°C et maintien à cette température pendant une période, pour faire précipiter les matières solides ; et
(4) récupération des matières solides comme composant de catalyseur,
dans lequel le système de solvant est un comprenant au moins un composé époxy organique, au moins un composé organique du bore, au moins un alcool, et éventuellement au moins un diluant inerte, ou un comprenant au moins un composé époxy organique, au moins un composé organophosphoré, au moins un alcool, et éventuellement au moins un diluant inerte, et
dans lequel le au moins un alcool est choisi parmi les alcools alkyliques linéaires éventuellement halogénés ayant de 1 à 10 atomes de carbone, les alcools alkyliques ramifiés éventuellement halogénés ayant de 3 à 10 atomes de carbone, les alcools cycloalkyliques éventuellement halogénés ayant de 3 à 10 atomes de carbone, les alcools
aryliques éventuellement halogénés ayant de 6 à 20 atomes de carbone, les alcools aralkyliques éventuellement halogénés ayant de 7 à 20 atomes de carbone, les alcools alkaryliques éventuellement halogénés ayant de 7 à 20 atomes de carbone, et les mélanges de ceux-ci.

11. Procédé selon la revendication 10, dans lequel la température pour la dissolution varie de 40 à 100°C.

12. Catalyseur pour la polymérisation de l'éthylène, comprenant un produit de réaction de :
(1) le composant de catalyseur selon l'une quelconque des revendications 1 à 9 ; et
(2) au moins un composé organique d'aluminium de formule AlRₙX₃₋ₙ, dans lequel R est indépendamment un hydrocarbyle en C₁-C₂₀, X est indépendamment un atome d'hydrogène ou un atome d'halogène, et n a une valeur satisfaisant à 1<n≤3.

13. Procédé pour la polymérisation de l'éthylène, comprenant
(i) la mise en contact, dans des conditions de polymérisation, d'éthylène et éventuellement au moins d'une α-oléfine ayant de 3 à 20 atomes de carbone en tant que comonomère avec le catalyseur selon la revendication 12 ; et
(ii) la récupération du polymère résultant.
